# EUROPEAN PATENT APPLICATION

(11) **EP 3 138 405 A1**
(43) Date of publication of application: **08.03.2017**
(21) Application number: 16460062.9
(22) Date of filing: 30.08.2016
(51) Int. Cl.: A21D 2/26, A21D 2/36, A21D 8/04, A21D 13/06, A23L 33/21

(54) **BAKERS' ARTICLES AND A METHOD FOR THE PREPARATION OF BAKERS' ARTICLES**

(30) Priority: 31.08.2015 PL 41376615
(71) Applicant: Silcar Sp. z o.o., 40-094 Katowice (PL)
(72) Inventor: Wyrwisz, Jaroslaw, 21-102 Ostrowek (PL); Wierzbicka, Agnieszka, 07-784 Warszawa (PL); Poltorak, Andrzej, 02-797 Warszawa (PL); Kurek, Marcin, 05-090 Raszyn (PL); Piwinska, Monika, 01-821 Warszawa (PL); Moczkowska, Malgorzata, 02-441 Warszawa (PL); Rozbicki, Jan, 05-200 Wolomin (PL); Jochymek, Pawel, 32-332 Bukowno (PL); Burzawa, Elzbieta, 32-305 Olkusz (PL); Tracz, Dominik, 32-340 Wolbrom (PL)
(74) Representative: Padée, Grazyna

(57) **Abstract**

A method for the preparation of bakers' articles, wherein oat fibre, vital gluten, yeast, a mixture of enzymes, salt and water are added to wheat flour or a mixture of wheat and rye flours, the dough is kneaded, left for preliminary fermentation, divided and formed into wads of dough, the formed dough wads are subject to final fermentation, then the article is baked and cooled, the method according to the invention being characterised in that from 4 to 20% by wt. of wheat flour or a mixture of wheat and rye flours is replaced with an oat fibre preparation containing from 39 to 48% by wt. of dietary fibre, including from 20 to 25% by wt. of water-insoluble fractions and from 19 to 23% of water-soluble fractions, and from 14 to 25% by wt. of protein, from 1 to 12% by wt. of fats, from 2 to 25% of available carbohydrates, with a humidity not higher than 12% by wt., with a fineness of 100 µm < D_{[0.9]} < 300 µm, in dry or hydrated form. The invention also pertains to bakers' articles in the form of bread and rolls.

## Description

The invention relates to a method for the preparation of bakers' articles, and bakers' articles with a high share of dietary fibre of oat origin.

The significant advantages of consuming products rich in dietary fibre, advantages which are being discovered in increasing numbers, provide motivation to develop and implement the production of innovative goods containing this ingredient, as well as existing high-fibre products undergoing constant improvement. Fibre-rich food, which also has a reduced calorific value, constitutes a group of functional food (Regulation (EC) No 1924/2006 of the European Parliament and of the Council of 20 December 2006 on nutrition and health claims made on foods, supplemented by the annex to the Regulation (EC) No 116/2010 of 9 February 2010), which is exceptionally needful in the construction of a proper structure of consumption of food products. A high-fibre diet (consumption of above 25 g/day) exhibits a series of potential health advantages. Specific fractions of fibre, particularly soluble fibre, may contribute to a reduction in levels of total cholesterol, LDL cholesterol, as well as triglycerides in blood, and a reduction in the risk of heart disease. Dietary fibre reduces the risk of coronary heart disease and favours the therapy of arterial hypertension, as well as that of diabetes and obesity. Dietary fibre, particularly that contained in grain products, is connected with the regulation of the activity of the digestive tract. Also, the significant effect of fibre in the reduction of large intestine diseases has been ascertained. Considering the high share of bakery products in an average food portion, enriching them with an addition of dietary fibre may bring a real favourable health effect.

An addition of dietary fibre in the production of bakery products is considered an effective method for enriching the diet. The enrichment of various types of bakers' articles with dietary fibre is based on an addition of fibre preparations or the use of fibre-rich raw materials in the production. While baking, fibre preparations of wheat, oat, barley, nut, fruit or vegetable origin are added.

The fibre addition affects the structure, colour and volume of bakery products, and the efficiency of the process (Dikeman C.L., Fahey G.C. 2006: Viscosity as related to dietary fiber: a review. Crit Rev Food SciNutr. 46(8):649-63;Piteira M.F., Maia J.M., Raymundo A., Sousa I. 2006: Extensional flow behaviour of natural fibre-filled dough and its relationship with structure and properties. J Non-Newtonian Fluid Mech. 137:72-80). The influence depends on the magnitude of the fibre addition, but also on its type. Manufacturing products enriched with dietary fibre but without changes in their appearance, texture and taste poses a challenge. It is particularly important in the case of bakery products, because for many reasons consumers prefer white bakery goods to whole-grain bakery goods, and therefore manufacturing bakery products enriched with fibre, and sensorily not diverging from white wheat bakery products is advisable.

An important factor affecting both the health-promoting properties of bakers' products and their technological and sensory parameters is constituted by the content of the individual fibre fractions. It is known that there are two fractions of fibre: water-insoluble (e.g. cellulose, ligriins, some hemicelluloses), and water-soluble (e.g. pectins, mucilages, waxes, some hemicelluloses). Each of these fibre fractions is characterised by a different health-promoting action. The insoluble fibre swells in aqueous medium, filling the bowels, and thus regulates peristalsis and prevents constipation. The water-soluble fibre forms a viscous gel in aqueous medium. This property reduces the cholesterol concentration in blood, affects the regulation of glucose concentration, reduces the absorption of sugars and creates a sensation of satiety. Therefore, the ability to affect the contents of the individual fibre fractions in the product, the fractions exhibiting a particular health-promoting effect or playing a particular functional role in the processing, is of importance. In baker's articles the insoluble fibre usually predominates, having less significance for the regulation of cholesterol and glucose levels in the organism. Thus, an increase in the supply of soluble fibre in bakery products would be very desirable from the point of view of the health-promoting values of these articles. However, the fact that water-soluble fibre fractions absorb a large amount of water constitutes a problem. The water is necessary for the correct pasting of starch in the process of baking bakery products. Correct pasting of starch, or assuming a water-soluble form by the starch, results in achieving a proper structure of the bakery products' crumb. A deficiency of water caused by its absorption by the soluble fibre leads to the collapse of the product in the final phase of baking.

Also, the fact that the added fibre preparation may participate in the formation of the bakery products' structure, by incorporation in the gluten-starch system, is of significance. From this point of view, not only is the share of the individual fibre fractions important, but also their fineness, being significant for process parameters, as they contribute to a change in dough characteristics - its rheological properties and growth, and they also affect the properties of the final product.

Moreover, it should be remembered that in order for the bakers' articles to be characterised by a "clean label", the use of additional substances from the E numbers list should be eliminated, e.g. emulsifiers which enhance the technological properties of the dough, and the texture and taste of the final product. Total elimination of these substances in the recipes of bakery products, particularly those with a significant addition of a fibre preparation, poses a technological challenge because of, among other things, the problem in achieving the proper volume of bakery products. On the other hand, the elimination of chemical additives from the recipes of bakery products constitutes an added value, particularly in the case of persons prone to allergies and food intolerances. While consuming bakers' articles, even a small addition of so-called enhancers may have an adverse effect on health in such persons.

In general, the known method for the preparation of bakery products comprises the following steps: mixing the flour with loose ingredients, adding loose ingredients to yeast solubilised in water, dough kneading, preliminary fermentation, division and forming of dough wads, final fermentation (proofing or simmering), baking and cooling, and, optionally, packing.

The goal of the invention was to obtain bakers' articles with comparable characteristics to their commercial counterparts, as well as having a high consumer acceptability, but characterised by health-promoting qualities due to a high fibre content, particularly its water-soluble fractions.

The method for the preparation of bakers' articles according to the invention is characterised in that from 4 to 20% by wt. of wheat flour or a mixture of wheat and rye flours is replaced with an oat fibre preparation, containing from 39 to 48% by wt. of dietary fibre, including from 20 to 25% by wt. of water-insoluble fractions and from 19 to 23% of water-soluble fractions, and from 14 to 25% by wt. of protein, from 1 to 12% by wt. of fats, from 2 to 25% of available carbohydrates, with a humidity not higher than 12% by wt., with a fineness of 100 µm < D_{[0.9]} <300 µm (D_{[0.9]} - particle size larger than the size of 90% of the particles in the sample), then a mixture of enzymes, vital gluten in the amount of 0.5% by wt. to 3.0% by wt. in relation to the flour-fibre preparation mixture, yeast in the amount of 3.0-6.0% by wt. in relation to the flour-fibre preparation mixture, and salt are added. The mixture of enzymes from non-pathogenic microorganisms contains: mould α-amylase, bacterial xylanase, cellulase and glucose oxidase in the total amount of 30 ppm to 65 ppm. Also, from 53% by wt. to 78% by wt. of water in relation to the flour-fibre preparation mixture is added to the dough. The dough obtained from the ingredients mentioned above is kneaded for 4 to 10 minutes, left for preliminary fermentation for 8 to 15 minutes, divided and formed into wads of dough, the formed wads are subject to final fermentation for 30-60 minutes, at a temperature of 34-36°C, a humidity of 72-80%, then baked and cooled.

Preferably, in the case when the bakers' article is bread: the addition of water in the dough recipe amounts to from 58% by wt. to 75% by wt., the yeast proportion amounts to 3.5-4% by wt., and the proportion of the individual enzymes in the enzyme mixture is as follows: mould α-amylase 10-25 ppm, bacterial xylanase 5-12 ppm, cellulase 7-16 ppm, glucose oxidase 5-10 ppm.

Preferably, in the case when the bakers' article is a bread roll: the addition of water in the dough recipe amounts to from 53% by wt. to 68% by wt., the yeast proportion amounts to 5-6% by wt., and proportion of the individual enzymes in the enzyme mixture is as follows: mould α-amylase 10-15 ppm, bacterial xylanase 5-20 ppm, cellulase 5-10 ppm, glucose oxidase 8-10 ppm.

Preferably, in the case when the bakers' article is a bread roll, sugar is added to the raw materials mixture in the amount of 0.5-2% by wt. in relation to the flour-fibre preparation mixture, and vegetable oil, preferably rapeseed oil, is added in the amount of 1.5 to 2.5% by wt. in relation to the flour-fibre preparation mixture.

In the case when a bakers' article obtained according to the deferred baking technology is to be the final product, the formed article is baked at a temperature of 180°C to 210°C for 12-14 minutes, until the crumb reaches a temperature of 96-99°C and a fixation of the products' structure is obtained without discolouration of the products' crust. Then, the products are cooled to a temperature of 55°C to 65°C inside the article, and the so-prepared articles are frozen.

As a result of the so-realised process according to the invention, a bakers' article is obtained in the form of bread with the following parameters: dietary fibre content from 3 to 9% by wt., including soluble fibre from 1.2 to 4% by wt., insoluble fibre from 2 to 5% by wt., crumb hardness from 1 to 6 (N), crumb elasticity of 0.5 to 1,0, compactness 0.55-0.80, brightness L* from 55 to 66, red colour saturation a* from 0.25 to 2, yellow colour saturation b* from 10 to 18.

A bakers' article in the form of a roll obtained by the method according to the invention is characterised by the following parameters: oat fibre content from 3 to 7% by wt., including soluble fibre from 1 to 3% by wt. and insoluble fibre from 2.0 to 4% by wt., crumb hardness from 1 to 3 (N), crumb elasticity from 0.7 to 1.1 (-), compactness 0.6-0.8 (-), brightness L* from 60 to 75, red colour saturation a* from (-1) to 2, yellow colour saturation b* from 10 to 18.
Figure 1 of the drawing shows the influence of the proportion of the dietary fibre preparation on the crumb hardness of bread during storage, where hardness is the maximum force needed for achieving a deformation of the sample.
Figure 2 of the drawing shows the influence of the proportion of the dietary fibre preparation on the crumb chewability of bread during storage, where the chewability is the energy needed for comminution (chewing) of the product with solid consistency to a swallowable state.
Figure 3 of the drawing shows the influence of the proportion of the dietary fibre preparation on the crumb resilience of bread during storage, where the resilience is the ability of the product to return to its initial form after the first squeeze.
Figure 4 of the drawing shows the influence of the proportion of the dietary fibre preparation on the crumb elasticity of bread during storage, where the elasticity is the rate of the return from the deformed state to the initial state.
Figure 5 of the drawing shows the influence of the proportion of the dietary fibre preparation on the crumb compactness of bread during storage, where the compactness reflects the force of the internal bonds in the product.

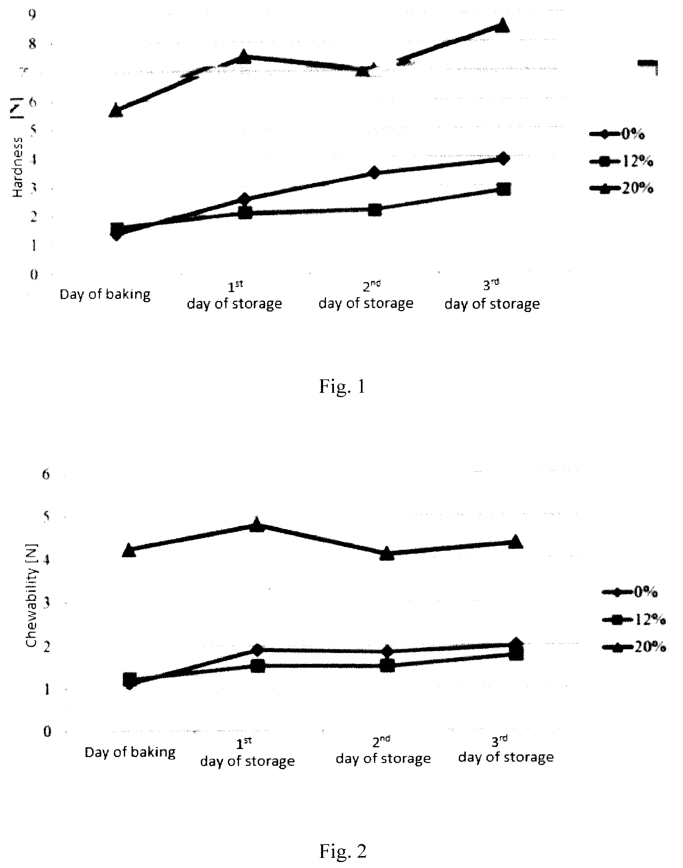

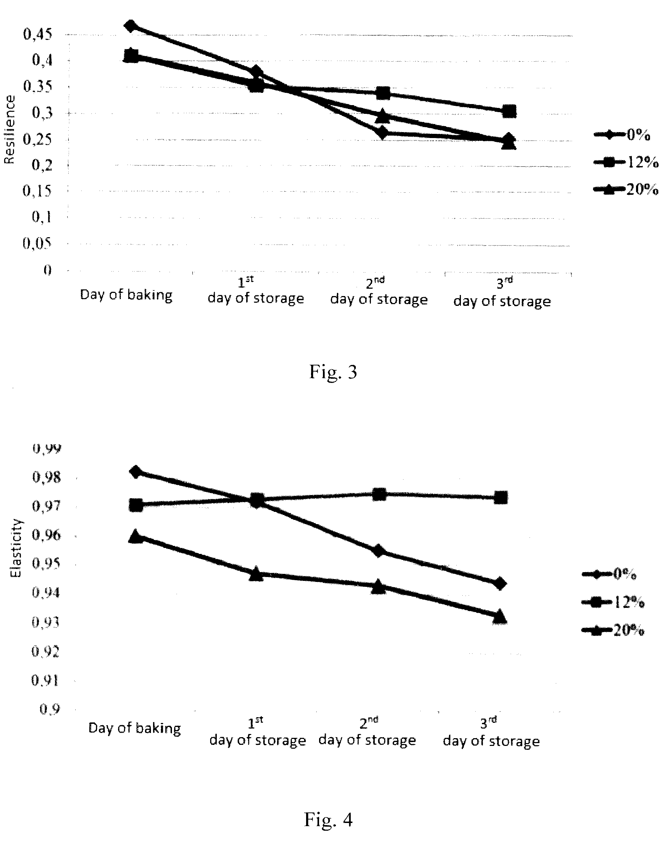

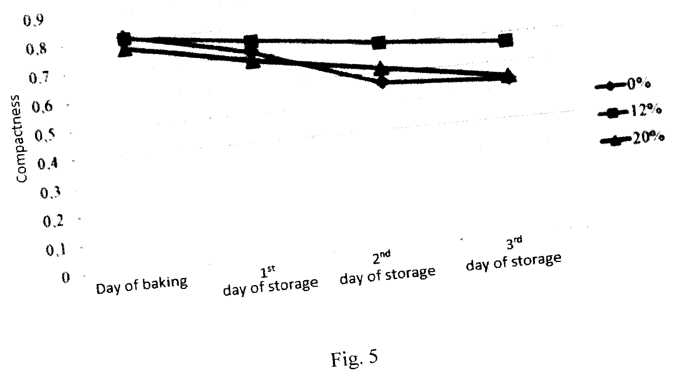

In the method according to the invention, some of flour was replaced with a finely divided fibre preparation with a high proportion of the water-soluble fraction. Simultaneously, the proportion of water was increased, vital gluten was added, and the set of enzymes defined above was introduced. Most of all, the enzymes cause hydrolysis of starch. Hydrolysed starch requires a smaller amount of water and a temperature lower by about 5-7°C to be pasted, allowing in consequence for the introduction of a larger amount of water-soluble fibre, with a higher health-promoting value, to the product. In turn, the high fineness of the fibre allows for its easier incorporating into the dough structure, with a reduced effect of its loading, and for forming a protein-carbohydrate system. In the method according to the invention, the kneading time, the final fermentation time, and the baking time are shorter than in the case of a bakers' article not containing the fibre preparation. Binding a larger amount of water and reduction of the amount of starch by the introduction of the oat fibre preparation to the bakers' article results in the limitation of the unfavourable starch retrogradation process and water syneresis, which allows for obtaining higher product efficiency and a longer duration of freshness. Breads with a proportion of fibre underwent the staling process during storage significantly more slowly, which is indicated by a lower hardness and chewability (Fig. 1 and Fig. 2) and increased crumb resilience, elasticity and compactness after a 3-day storage period (Fig. 3, Fig. 4 and Fig. 5). Similar dependences were obtained for the product in the form of rolls. Articles containing a 12% proportion of the fibre preparation were characterised by the best parameters. It is noteworthy that the prolonged freshness period of bakery products is obtained solely due to an increased amount of fixed water, without chemical substances prolonging freshness.

The use of the oat fibre preparation allowed for increasing the contents of both soluble and insoluble fractions in breads containing a proportion of the preparation. An almost 80% increase in the dietary fibre content was observed in breads with a 12% fibre proportion, and the soluble fraction increased by nearly 60% in relation to breads without a proportion of the oat fibre preparation. In total, these fact allowed for an increase in the fibre by about 70%. After the application of a 20% fibre proportion in relation to the control sample, increases in the insoluble fraction content by more than 140% and in the soluble fraction content by almost 140% were found. In the case of rolls baked by conventional direct baking, with 8%, 12% and 16% additions of fibre preparation, the soluble fibre content increased by 38%, 60% and 85%, respectively, while the insoluble fraction content increased by 47%, 65% and 86%, respectively. Such a big increase significantly modifies the value of bakers' articles obtained by the method according to the invention.

A bakers' article according to the invention is characterised by sensory quality factors such as crumb softness, crumb elasticity, compactness, crust crispness, colour, and its equalization in the section (no visible particles of the preparation), with a consumer attractiveness as high as that of its commercial counterpart. Thanks to this fact, consumers do not have to change their purchasing habits while choosing bakery products with health-promoting features. The fact that the bakers' articles containing a high-fibre preparation go well together with the habits of consumers of white bakery products is a particular added value obtained in these articles.

Bakery products made according to the invention have the property of higher satiety provided by a lower calorific value supplied, and a longer duration of metabolism of the consumed bakery products due to a reduction of the so-called insulin peaks and the rate of carbohydrate metabolism. This is particularly important in the process aiding the therapy of diabetes, obesity and overweight states because it allows for eliminating the sensation of hunger at a much lower dose of food, and thereby a lower dose of supplied kilocalories, for a longer period. The presence of a substantial amount of micronised fibre built into the gluten-starch structure of the product causes increased metabolism of the bakers' articles, thanks to which bakery products of this type, consumed for a long period, will have a significant influence on the prevention of civilisation-related diseases such as, among others, overweight states and obesity in children, youth and adults, as well as sclerosis and type 2 diabetes.

The subject of the invention is presented in more detail in the following examples.

### Example 1. Bread.

To the fibre preparation obtained from husked oat grains, with a fibre content of 44%, including 21% by wt. of water-soluble fractions and 23% by wt. of water-insoluble fractions, 20% by wt. of protein, 10% by wt. of fats, 20% of available carbohydrates, with a humidity not exceeding 10% by wt., with a fineness of D_{[0.9]} = 280 µm, water was added in a mass ratio of 1:3, at a temperature of 20°C. Type 750 wheat flour was sieved twice, simultaneously carrying out a passage of vital gluten and mixture of enzymes: mould α-amylase (Ga A5000), bacterial xylanase (Pb 950), cellulase (Pb 9000), glucose oxidase (Ga S 759). The yeast was liquefied in water. Type 720 rye flour in the form of a natural rye leaven was prepared in an amount sufficient to obtain an 85% share of wheat flour and a 15% share of rye flour. A 70% solution of salt in water was prepared. All the ingredients mentioned above were mixed, with an increase in the number of revolutions during mixing, and then the dough was kneaded. Kneading was carried out in a kneading-trough with a capacity of 160/10 kg (max/min amount of the dough), with the following agitator rates: first gear 70/120, second gear 160/220. Before the dough kneading, the ingredients were heated so that the dough would have a temperature of 26-27°C after kneading. The dough was left at the ambient temperature for 10 minutes for preliminary fermentation. Then, the dough was divided into wads with a mass of 700 g and formed into loaves. The loaves were subjected to final fermentation at a temperature of 35°C and a humidity of 75%. After the fermentation step the loaves were baked in two steps. The first baking step was carried out at a temperature of 240°C for 4 minutes, with pre-steaming, and the second step at 220°C, with a humidity setting of 50%, until a temperature of 98°C was reached in the crumb. After the baking was completed, the loaves were cooled at room temperature.
Using the method described above, bread with the shares of raw materials listed in Table 1 was obtained. Table 2 shows the condition of the process and the number of loaves obtained. Table 3 shows the following parameters which characterise the obtained articles having the form of bread:
- section colour determined using a Color i5 (X-Rite) spectrophotometer and presented in the CIE L*a*b* space. The results are related to a D65 illuminate and a 10° observer. Such a colorimetric system is characterised by the following coordinates: L* - defining the sample brightness; a* - expressing the red/green balance; b* - expressing the blue or yellow component of the sample colour.
- volume analysed in the loose material, according to the method (Jakubczyk and Haber, 1983). Contents of soluble and insoluble fractions of dietary fibre determined according to AOAC (2006) - method 935.38
- humidity determined by the dryer method according to AOAC (2006) - method 925.10.
- texture profile determined using a TA.XT Plus texture meter, carrying out the TPA test in the crumb sample having the shape of a cube with a side of 20 mm, by aluminium probe P-35, with a speed of travel of 2 mm/s, deformation measurement in a layer with a thickness of 50% of the total sample height, and a relaxation time of 3 s.

**Table 1**

| | **0** | **4** | **8** | **12** | **16** | **20** |
|---|---|---|---|---|---|---|
| Wheat flour | 8500 g | 8160 g | 7820 g | 7480 g | 7140 g | 6800 g |
| Rye flour | 1500 g | 1440 g | 1380 g | 1320 g | 1260 g | 1200 g |
| Dietary fibre preparation | - | 400 g | 800 g | 1200 g | 1600 g | 2000 g |
| Vital gluten | 80 g | 120 g | 120 g | 150 g | 150 g | 150 g |
| Yeast | 350 g | 350 g | 350 g | 350 g | 350 g | 350 g |
| Salt | 200 g | 200 g | 200 g | 200 g | 200 g | 200 g |
| Ga A 5000 | 10 ppm | 10 ppm | 15 ppm | 20 ppm | 20 ppm | 20 ppm |
| Pb 950 | - | 6 ppm | 10 ppm | 10 ppm | 10 ppm | 10 ppm |
| Pb 9000 | 5 ppm | 7ppm | 12 ppm | 14 ppm | 14 ppm | 14 ppm |
| Ga S 759 | 5 ppm | 8 ppm | 10 ppm | 8 ppm | 8 ppm | 8 ppm |
| Water | 5800 g | 6100 g | 6400 g | 6700 g | 7000 g | 7300 g |

**Table 2**

| | **0** | **4** | **8** | **12** | **16** | **20** |
|---|---|---|---|---|---|---|
| Kneading time [min] | 8 | 7.6 | 7.3 | 7 | 6.8 | 6.6 |
| Final fermentation time [min] | 46 | 44 | 42 | 40 | 38 | 36 |
| Baking time [min] | 36 | 34 | 32 | 30 | 28 | 26 |
| Number of obtained loaves | 23.47 | 23.96 | 24.39 | 24.86 | 25.29 | 25.72 |

**Table 3**

| | **0** | **12** | **20** |
|---|---|---|---|
| Humidity [g/100g] | 45.88±0.02 | 47.60±0.01 | 48.13±0.3 |
| Hardness [N] | 1.36±0.03 | 1.57±0.05 | 5.71±0.43 |
| Elasticity | 0.982±0.005 | 0.971±0.001 | 0.960±0.013 |
| Compactness | 0.811±0.012 | 0.806±0.020 | 0.769±0.003 |
| Chewability [N] | 1.12±0.03 | 1.23±0.01 | 4.23±0.38 |
| Resilience | 0.467±0.018 | 1.23±0.01 | 0.411±0.002 |
| L* | 61.24±0.95 | 60.60±2.78 | 58.30±0.75 |
| a* | 0.39±0.13 | 0.56±0.12 | 1.59±0.17 |
| b* | 10.66±0.91 | 11.49±0.36 | 15.71±0.36 |
| Volume [cm³/100g] | 498±7 | 557±2 | 310±8 |
| Soluble dietary fibre [g/100g] | 0.99±0.03 | 1.56±0.02 | 2.45±0.02 |
| Insoluble dietary fibre [g/100g] | 1.45±0.01 | 2.60±0.01 | 3.45±0.04 |
| Total dietary fibre [g/100g] | 2.45±0.03 | 4.16±0.03 | 5.90±0.05 |

### Example 2. Rolls

Rolls were baked by the method described in Example 1, but type 500 wheat flour was used, sugar and rapeseed oil were added to the mixture, the dough weigh-out was 74 g, the baking temperature was 260°C in the first step and 240°C in the second step, and baking time was 13-15 minutes.

The shares of raw materials are listed in Table 4. Table 5 shows the condition of the process and the number of rolls obtained. Table 6 shows the following parameters which characterise the obtained articles having the form of rolls:

**Table 4**

| | **0** | **4** | **8** | **12** | **16** | **20** |
|---|---|---|---|---|---|---|
| Wheat flour | 20000 g | 19200 g | 18400 g | 17600 g | 16800 g | 16000 g |
| Dietary fibre preparation | - | 800 g | 1600 g | 2400 g | 3200 g | 4000 g |
| Vital gluten | - | 200 g | 400 g | 400 g | 600 g | 600 g |
| Yeast | 900 g | 1000 g | 1000 g | 1200 g | 1200 g | 1200 g |
| Salt | 360 g | 360 g | 360 g | 360 g | 360 g | 360 g |
| Sugar | 200 g | 200 g | 200 g | 200 g | 200 g | 200 g |
| Rapeseed oil | 400 g | 400 g | 400 g | 400 g | 400 g | 400 g |
| Ga A 5000 | 0.2 g | 0.2 g | 0.3 g | 0.3 g | 0.3 g | 0.3 g |
| Pb 950 | - | 0.1 g | 0.4 g | 0.4 g | 0.4 g | 0.4 g |
| Pb 9000 | - | 0.1 g | 0.2 g | 0.2 g | 0.2 g | 0.2 g |
| Ga S 759 | 0.1g | 0.2 g | 0.2 g | 0.2 g | 0.2 g | 0.2 g |
| Water | 10260 g | 10600 g | 11200 g | 12000 g | 12720 g | 13320 g |

**Table 5**

| | 0 | 4 | 8 | 12 | 16 | 20 |
|---|---|---|---|---|---|---|
| Kneading time [min] | 8 | 7.8 | 7.6 | 7.4 | 7.2 | 7 |
| Final fermentation time [min] | 50 | 48 | 46 | 44 | 42 | 40 |
| Baking time [min] | 15 | 14.6 | 14.3 | 14 | 13.6 | 13.3 |
| Number of obtained rolls | 434.05 | 442.71 | 453.52 | 467.04 | 480.82 | 488.93 |

**Table 6**

| | **0** | **8** | **12** | **16** |
|---|---|---|---|---|
| Humidity [g/100g] | 42.40±0.26 | 44.27±0.01 | 46.61±0.01 | 46.23±0.01 |
| Hardness [N] | 2.39±0.01 | 1.23±0.05 | 1.29±0.07 | 1.54±0.08 |
| Elasticity | 0.961±0.004 | 0.962±0.008 | 0.966±0.006 | 0.954±0.003 |
| Compactness | 0.749±0.004 | 0.775±0.002 | 0.790±0.009 | 0.765±0.009 |
| Chewability [N] | 1.71±0.01 | 0.92±0.05 | 0.98±0.07 | 1.12±0.05 |
| Resilience | 0.381±0.004 | 0.382±0.005 | 0.408±0.010 | 0.358±0.006 |
| L* | 70.12±0.65 | 66.74±1.54 | 68.79±0.59 | 69.95±1.15 |
| a* | -0.33±0.09 | 0.34±0.03 | 0.35±0.09 | 0.49±0.17 |
| b* | 13.56±0.36 | 14.32±0.51 | 14.74±0.21 | 15.61±0.32 |
| Volume [cm³] | 313±6 | 318±3 | 305±5 | 352±13 |
| Soluble dietary fibre [g/100g] | 1.06±0.01 | 1.46±0.03 | 1.70±0.01 | 1.96±0.02 |
| Insoluble dietary fibre [g/100g] | 1.55±0.01 | 2.28±0.04 | 2.56±0.01 | 2.89±0.03 |
| Total dietary fibre [g/100g] | 2.62±0.01 | 3.74±0.07 | 4.25±0.02 | 4.86±0.05 |

## Claims

1. A method for the preparation of a bakers' articles, wherein oat fibre, vital gluten, yeast, a mixture of enzymes, salt and water are added to wheat flour or a mixture of wheat and rye flours, the dough is kneaded, left for preliminary fermentation, divided and formed into wads of dough, the formed dough wads are subject to final fermentation, then the article is baked and cooled, the method being **characterised in that** from 4 to 20% by wt. of wheat flour or a mixture of wheat and rye flours is replaced with an oat fibre preparation containing from 39 to 48% by wt. of dietary fibre, including from 20 to 25% by wt. of water-insoluble fractions and from 19 to 23% of water-soluble fractions and from 14 to 25% by wt. of protein, from 1 to 12% by wt. of fats, from 2 to 25% of available carbohydrates, with a humidity not higher than 12% by wt., with a fineness of 100 µm < D_{[0.9]} < 300 µm, in dry or hydrated form, vital gluten is used in the amount of 0.5% by wt. to 3.0% by wt. in relation to the flour-fibre preparation mixture, yeast is added in the amount of 3.0-6% by wt. in relation to the flour-fibre preparation mixture, water is added in the amount of 53% by wt. to 78% by wt. in relation to the flour-fibre preparation mixture, the mixture of enzymes containing mould α-amylase, bacterial xylanase, cellulase and glucose oxidase in the total amount of 30 ppm to 65 ppm, the dough obtained from the ingredients mentioned above is kneaded for 4 to 10 minutes, left for preliminary fermentation for 8 to 15 minutes, divided and formed into wads of dough, the formed wads are subject to final fermentation for 30-60 minutes, at a temperature of 34-36°C, a humidity of 72-80%, then baked and cooled.

2. The method according to claim 1, **characterised in that** in the case when the bakers' article is bread: the addition of water in the dough recipe amounts to from 58% by wt. to 78% by wt., the yeast proportion amounts to 3.5-4% by wt., and the proportion of the individual enzymes in the enzyme mixture is as follows: mould α-amylase 10-25 ppm, bacterial xylanase 6-12 ppm, cellulase 7-16 ppm, glucose oxidase 8-10 ppm.

3. The method according to claim 1, **characterised in that** in the case when the bakers' article is a roll: the addition of water in the dough recipe amounts to from 53% by wt. to 68% by wt., the yeast proportion amounts to 5-6% by wt., and the proportion of the individual enzymes in the enzyme mixture is as follows: mould α-amylase 10-15 ppm, bacterial xylanase 5-20 ppm, cellulase 5-10 ppm, glucose oxidase 8-10 ppm.

4. The method according to claim 1, **characterised in that** in the case when the bakers' article is a roll, sugar is added to the raw materials mixture in the amount of 0.5-2% by wt. in relation to the flour-fibre preparation mixture, and vegetable oil is added in the amount of 1.5 to 2.5% by wt. in relation to the flour-fibre preparation mixture.

5. A bakers' article in the form of bread with the following parameters: oat fibre content from 3 to 9% by wt., including from 1.2 to 4% by wt. of soluble fibre and from 2.0 to 5% by wt. of insoluble fibre, crumb hardness from 1 to 6 (N), crumb elasticity from 0.5 to 1.0 (-), compactness from 0.55 to 0.80 (-), brightness L* from 55 to 66, red colour saturation a* from 0.25 to 2, yellow colour saturation b* from 10 to 18.

6. The bakers' article in the form of a roll with the following parameters: oat fibre content from 3 to 7% by wt. including from 1 to 3% by wt. of soluble fibre and from 2.0 to 4% by wt. of insoluble fibre, crumb hardness from 1 to 3 (N), crumb elasticity from 0.7 to 1.1 (-), compactness from 0.6 to 0.8 (-), brightness L* from 60 to 75, red colour saturation a* from (-1) to 2, yellow colour saturation b* from 12 to 19.
